Europäisches Patentamt

European Patent Office

Office européen des brevets

(11) Veröffentlichungsnummer: **0 271 639 B1**

(12) **EUROPÄISCHE PATENTSCHRIFT**

(45) Veröffentlichungstag der Patentschrift: **19.06.91**

(51) Int. Cl.5: **B01J 19/00, C01C 1/04**

(21) Anmeldenummer: **87112524.1**

(22) Anmeldetag: **28.08.87**

(54) **Vorrichtung zum Kühlen von Gasen aus der Ammoniaksynthese.**

(30) Priorität: **13.12.86 DE 3642673**

(43) Veröffentlichungstag der Anmeldung:
**22.06.88 Patentblatt 88/25**

(45) Bekanntmachung des Hinweises auf die
Patenterteilung:
**19.06.91 Patentblatt 91/25**

(84) Benannte Vertragsstaaten:
**DE FR GB IT NL**

(56) Entgegenhaltungen:
**EP-A- 0 274 006**
**DE-A- 3 049 409**
**DE-B- 2 846 455**
**US-A- 2 382 255**
**US-A- 4 576 225**

(73) Patentinhaber: **Deutsche Babcock-Borsig AG**
**Berlinerstrasse 27-37**
**W-1000 Berlin 27(DE)**

(72) Erfinder: **Kehrer, Wolfgang**
**Peter-Strasser-Weg 18**
**W-1000 Berlin 41(DE)**
Erfinder: **Lachmann, Helmut**
**Gottfried-von-Cramm-Weg 35**
**W-1000 Berlin 33(DE)**
Erfinder: **Nassauer, Konrad**
**Rauhbankzeile 15**
**W-1000 Berlin 26(DE)**

(74) Vertreter: **Müller, Jürgen, Dipl.-Ing.**
**Deutsche Babcock AG Lizenz- und Patentab-**
**teilung Duisburger Strasse 375**
**W-4200 Oberhausen 1(DE)**

## Beschreibung

Die Erfindung betrifft eine Vorrichtung zum Kühlen von Gasen aus der Ammoniaksynthese nach dem Oberbegriff des Anspruches 1.

Bei einem aus der DE-A-3 049 409 bekannten Wärmetauscher zum Kühlen von Gasen aus der Ammoniaksynthese ist die Gaseintrittskammer innerhalb der Gasaustrittskammer angeordnet und über Einsteckrohre mit den Bündelrohren verbunden. Auf diese Weise wird den besonderen, bei der Kühlung von Gasen aus der Ammoniaksynthese auftretenden Verhältnissen (Nitrierung) Rechnung getragen.

Aus der US-A-4 510 123 ist es bekannt, zur Verbesserung der Ammoniakausbeute in Ammoniakanlagen mehrere Reaktoren zu verwenden, die von dem Reaktionsgasgemisch nacheinander durchströmt werden. Zwischen den einzelnen Reaktoren wird das Reaktionsgasgemisch gekühlt. Dabei ist vor und hinter dem letzten Reaktor ein Abhitzekessel angeordnet. Die Notwendigkeit mehrerer Abhitzekessel erhöht in Verbindung mit dem dazugehörenden Regel- und Rohrleitungssystem den apparativen Aufwand für eine Mehrreaktoranlage beträchtlich.

Ein aus der US-A-2 382 255 bekannter Wärmetauscher zur Durchführung chemischer Reaktionen weist einen von einem Wärmeaustauschmedium durchflossenen Innenraum auf, in dem zwei in gleicher Richtung durchströmte Rohrbündel angeordnet sind. Die Rohrbündel sind jeweils mit einer von zwei an beiden Enden des Wärmetauschers hintereinander angeordneten Kammern verbunden.

In der EP-A-0 274 006 ist ein Wärmetauscher mit zwei in entgegengesetzter Richtung durchströmten und nebeneinander angeordneten Rohrbündeln zum Kühlen von Gasen aus der Ammoniaksynthese beschrieben. Die die Rohre aufnehmenden Rohrböden begrenzen seitlich die Gaseintrittskammer des einen und die Gasaustrittskammer des anderen Rohrbündels. Dieser Wärmetauscher erfordert als Werkstoff für die Rohrböden und die Rohre einen nitrierbeständigen Stahl, der jedoch gegen wasserseitige Spannungsrißkorrosion empfindlich ist.

Die DE-B-2 846 455 und die US-A-4 510 123 zeigen Wärmetauscher mit einer Bypassleitung, die mit einem Drosselorgan versehen und parallel zu den Wärmetauscherrohren angeordnet ist. Durch diese Bypassleitung kann dem gekühlten Gas eine bestimmte Menge an ungekühltem Gas beigemischt werden.

Der Erfindung liegt die Aufgabe zugrunde, die gattungsgemäße Vorrichtung unter Beachtung der bei der Kühlung von Gasen aus der Ammoniaksynthese herrschenden Bedingungen derart zu gestalten, daß der apparative Aufwand für die Abhitzeverwertung in einer mehrere Reaktoren umfassenden Anlage verringert wird.

Diese Aufgabe wird bei einer gattungsgemäßen Vorrichtung erfindungsgemäß durch die kennzeichnenden Merkmale des Anspruches 1 gelöst. Durch die erfindungsgemäße Ausbildung der Vorrichtung werden zwei Abhitzekessel zu einem einzigen Apparat vereinigt, der auch nur ein einfach vorhandenes wasserseitiges Rohrleitungssystem erfordert. Die Reaktoreingänge und Reaktorausgänge können direkt mit dem erfindungsgemäßen Wärmetauscher verbunden werden, so daß die Reaktoren unmittelbar über den Wärmetauscher verbunden sind, und Gasleitungen zwischen den Reaktoren entfallen können. Jedes Gaseintrittsrohrende ist von vier Gasaustrittsrohrenden umgeben, deren Gasaustrittstemperatur so niedrig ist, daß sie kühlend auf die Eintrittsrohrenden wirken. Das ermöglicht Materialtemperaturen des Eintrittsrohrendes unterhalb der Temperatur, bei der eine Aufnitrierung des Stahlwerkstoffes eintritt. Es kann daher wegen der Ausschaltung der Gefahr einer Aufnitrierung als Rohrwerkstoff ferritischer Stahl verwendet werden, der gegen wasserseitige Spannungsrißkorrosion beständiger ist als nitrierbeständiger, austenitischer Stahl.

Durch den an sich bekannten Bypass gemäß Anspruch 2 wird eine zu niedrige Temperatur des gekühlten Gases vor den Eintritt in den zweiten Reaktor vermieden, indem diesem Gas eine bestimmte Menge ungekühlten Gases beigemischt werden kann.

Ein Ausführungsbeispiel der Erfindung ist in der Zeichnung dargestellt und wird im folgenden näher beschrieben.

Es zeigen:

Fig. 1      schematisch einen Längsschnitt durch eine Vorrichtung gemäß der Erfindung,

Fig. 2      den Schnitt II-II nach Fig. 1,

Fig. 3      die Einzelheit Z nach Fig. 2

Der dargestellte Wärmetauscher dient zum Kühlen von Gas, das in Reaktoren einer Anlage zur Herstellung von Ammoniak umgesetzt wird. Der Wärmetauscher umfaßt einen äußeren zylindrischen Mantel 1, der einen Innenraum 2 umschließt und mit einem Zuführungsstutzen 3 und einen Abführungsstutzen 4 für ein wärmeaufnehmendes Medium versehen ist. Als wärmeaufnehmendes Medium wird Wasser verwendet, das durch den Zuführungsstutzen 3 zugeführt wird, durch Wärmeaufnahme verdampft und als Wasser-Dampf-Gemisch durch den Abführungsstutzen 4 austritt.

Der Zuführungsstutzen 3 ist über eine Falleitung und der Abführungsstutzen 4 ist über eine Steigleitung mit einer Dampftrommel verbunden. Die Dampftrommel und die Leitungen sind aus Gründen der Übersichtlichkeit nicht dargestellt.

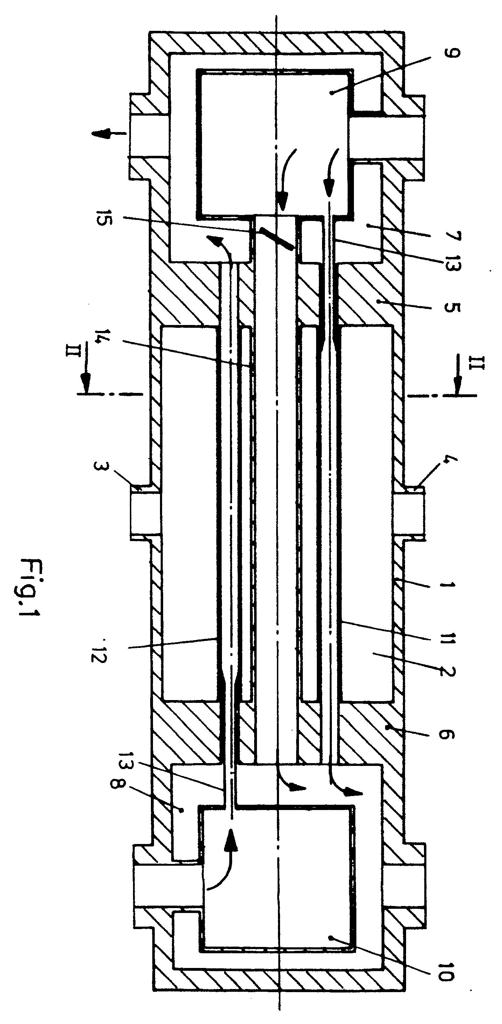

In den Mantel 1 sind zwei Rohrböden 5, 6 eingeschweißt, die den Innenraum 2 seitlich begrenzen. An die Rohrböden 5, 6 schließen sich zu beiden Seiten des Mantels 1 je eine Gasaustrittskammer 7, 8 an. Innerhalb der Gasaustrittskammern 7, 8 ist jeweils eine Gaseintrittskammer 9, 10 mit Abstand von den Rohrböden 5, 6 angeordnet. Die in der Fig. 1 links liegende Gaseintrittskammer 9 ist an einen ersten Reaktor und die rechts liegende Gaseintrittskammer 10 ist an einen zweiten Reaktor der Ammoniakherstellungsanlage angeschlossen. Die rechts liegende Gasaustrittskammer 8 ist mit dem Eingang des zweiten Reaktors und die links liegende Gasaustrittskammer 7 ist mit einer zu einer Weiterverarbeitungseinrichtung führenden Leitung verbunden. Die Reaktoren sind mit den Gaseintrittskammern 9, 10 und mit der einen Gasaustrittskammer 8 direkt verbunden. Der dargestellte Wärmetauscher stellt daher die direkte Verbindung zwischen zwei Reaktoren der Ammoniakherstellungsanlage dar.

Innerhalb des von dem Mantel 1 umschlossenen und von den Rohrböden 5, 6 seitlich begrenzten Innenraumes 2 sind gerade Rohre 11, 12 angeordnet. Die Anzahl der Rohre 11 ist identisch mit der Anzahl der Rohre 12. Die Rohre 11, 12 sind jeweils mit einer der Gaseintrittskammern 9 bzw. 10 und einer der Gasaustrittskammern 7 bzw. 8 verbunden. Außen isolierte Einsteckrohre 13 verbinden die jeweilige Gaseintrittskammer 9, 10 mit den eintrittsseitigen Enden der Rohre 11, 12. Die Einsteckrohre 13 ragen in die Rohre 11, 12 hinein und besitzen - in Strömungsrichtung des eintretenden Gases gesehen - hinter den Rohrböden 5, 6 eine Aufweitung, so daß sie an den Innenwandungen der Rohre 11, 12 anliegen.

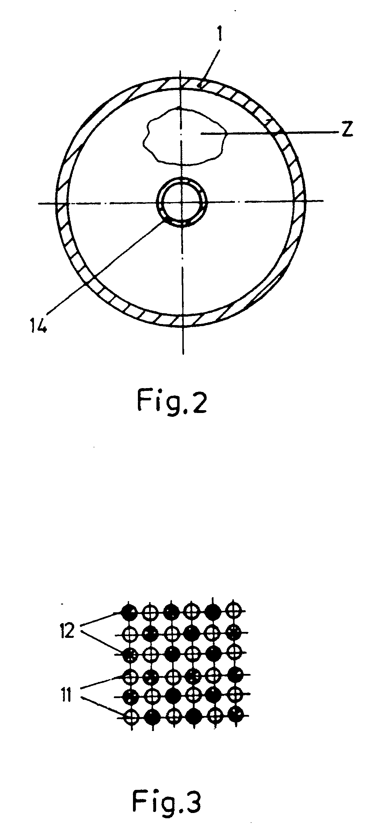

Die Rohre 11, 12 sind innerhalb des Innenraumes 2 so verlegt, daß die Rohre 11 abwechselnd neben den Rohren 12 liegen. Zur Verdeutlichung sei auf die Fig. 3 verwiesen, die den Ausschnitt aus dem Rohrfeld zeigt. Dabei sind die Rohre 11 als leere Kreise und die Rohre 12 als mit einem Kreuz ausgefüllte Kreise gekennzeichnet. Man erkennt, daß in den zwei zueinander senkrechten Richtungen, in denen die Rohre 11, 12 den geringsten Abstand voneinander zeigen, jeweils ein Rohr 11 neben einem Rohr 12 liegt. Benachbarte Rohre werden somit in entgegengesetzter Richtung durchströmt.

Vorzugsweise in der Längsachse des Mantels 1 ist parallel zu den Rohren 11, 12 ein Gasdurchgangsrohr 14 angeordnet, das die mit dem ersten Reaktor verbundene, links liegende Gaseintrittskammer 9 und die mit dem zweiten Reaktor verbundene, rechts liegende Gasaustrittskammer 8 verbindet. In dem Gasdurchgangsrohr 14 ist ein Drosselorgan 15 angeordnet. Das Gasdurchgangsrohr 14 dient als Bypass zu den Rohren 11. Je nach der Stellung des Drosselorgans 15 kann ein mehr oder weniger großer Anteil an heißem Gas dem in den Rohren 11 gekühlten Gas zur Konstanthaltung der Gastemperatur am Eintritt in den zweiten Reaktor beigemischt werden.

**Ansprüche**

1. Wärmetauscher zum Kühlen von in einer Ammoniakherstellungsanlage erzeugten Gasen, bestehend aus einem mit einem Zuführungsstutzen (3) und einem Abführungsstutzen (4) für ein wärmeaufnehmendes Medium versehenen zylindrischen Mantel (1), in dessen Innenraum (2) Rohre (11, 12) angeordnet sind, die in einem Rohrboden (5, 6) gehalten und mit einer Gaseintrittskammer (9, 10) und einer Gasaustrittskammer (7, 8) verbunden sind, wobei die Gasaustrittskammer (7, 8) durch den Rohrboden (5, 6) von dem Innenraum (2) getrennt und die Gaseintrittskammer (9, 10) innerhalb der Gasaustrittskammer (7, 8) in einem Abstand von dem Rohrboden (5, 6) angeordnet ist, **dadurch gekennzeichnet,** daß an zwei einander gegenüberliegenden Enden des Mantels (1) je eine Gaseintrittskammer (9 bzw. 10) und eine Gasaustrittskammer (7 bzw. 8) angeordnet sind, denen jeweils eine Gruppe von geraden Rohren zugeordnet ist, daß jeweils ein Rohr (11) einer Gruppe neben einem Rohr (12) der anderen Gruppe angeordnet ist und daß der Wärmetauscher derart zwischen zwei Reaktoren der Ammoniakherstellungsanlage angeordnet ist, daß die Gaseintrittskammer (9) der einen Gruppe von Rohren (13) an den ersten Reaktor und der zweite Reaktor an die Gasaustrittskammer (8) dieser Gruppe von Rohren (13) und an die in dieser Gasaustrittskammer (8) angeordnete Gaseintrittskammer (10) der anderen Gruppe von Rohren (12) angeschlossen ist.

2. Vorrichtung nach Anspruch 1, dadurch gekennzeichnet, daß eine der Gaseintrittskammern (9) mit der am anderen Ende des Mantels (1) angeordneten Gasaustrittskammer (8) über ein mit einem Drosselorgan (15) versehenes Gasdurchgangsrohr (14) verbunden ist.

**Claims**

1. Heat exchanger for the cooling of gases produced in an ammonia production plant, the heat exchanger consisting of a cylindrical jacket (1), which is provided with a feed nipple (3) and an outlet nipple (4) for a heat-absorbing medium and in the interior space (2) of which tubes (11, 12) are arranged, which are retained in a tube base (5, 6) and connected with a gas entry chamber (9, 10) and a gas exit chamber (7, 8), wherein the gas exit chamber (7, 8) is separated from the interior space (2) by the tube base (5, 6) and the gas entry chamber (9, 10) is arranged at a spacing from the tube base (5, 6) and within the gas exit chamber (7, 8), characterised thereby, that a respective gas entry chamber (9 or 10) and a respective gas exit chamber (7 or 8) are arranged at each of the mutually opposite ends of the jacket (1) and each associated with a respective group of straight tubes, that one tube (11) each of one group is arranged beside one tube (12) of the other group and that the heat exchanger is arranged in such a manner between two reactors of the ammonia production plant that the gas entry chamber (9) of the one group of tubes (13) is connected to the first reactor and the second reactor is connected to the gas exit chamber (8) of this group of tubes (13) and to the gas entry chamber (10), which is arranged within this gas exit chamber (8), of the other group of tubes (12).

2. Device according to claim 1, characterised thereby, that one of the gas entry chambers (9) is connected with the gas exit chamber (8) arranged at the other end of the jacket (1) by way of a gas passage tube (14) provided with a throttle organ (15).

## Revendications

1. Echangeur de chaleur, pour refroidir des gaz produits dans une installation de production d'ammoniac, composé d'une tubulure d'amenée (3) et d'une tubulure d'évacuation (4) pour une enveloppe cylindrique (1), pourvue d'un fluide recevant de la chaleur et dans l'espace intérieur (2) de laquelle sont disposés des tubes (11,12) qui sont maintenus dans un fond tubulaire (5,6) et reliés à une chambre d'entrée de gaz (9,10) et à une chambre de sortie de gaz (7,8), la chambre de sortie de gaz (7,8) étant séparée de l'espace intérieur (2) grâce aux fonds tubulaire (5,6) et la chambre d'entrée de gaz (9,10) étant disposée à l'intérieur de la chambre de sortie de gaz (7,8), à distance des fonds tubulaires (5,6), caractérisé en ce qu'aux deux extrémités mutuellement opposées de l'enveloppe (1) sont chaque fois disposées une chambre d'entrée de gaz (9, respectivement 10) et une chambre de sotie de gaz (7, respectivement 8), auxquelles est chaque fois associé un groupe de tubes droits, un tube (11) d'un groupe étant chaque fois disposé à côté d'un tube (12) de l'autre groupe, et l'échangeur de chaleur étant disposé de telle façon, entre deux réacteurs de l'installation de production d'ammoniac, que la chambre d'entrée de gaz (9) d'un groupe de tubes (13) est raccordé au premier réacteur et que le deuxième réacteur est raccordé à la chambre de sortie de gaz (8) de ce groupe de tubes (13) et à la chambre d'entrée de gaz (10), disposée dans cette chambre de sortie de gaz (8), de l'autre groupe de tubes (12).

2. Dispositif selon la revendication 1, caractérisé en ce que l'une des chambres d'entrée de gaz (9) est reliée à la chambre de sortie de gaz (8) disposée à l'autre extrémité de l'enveloppe (1), par l'intermédiaire d'un tube de passage de gaz (14) pourvu d'un organe d'étranglement.

Fig.1

Fig.2

Fig.3